# EUROPEAN PATENT SPECIFICATION

(11) **EP 1 779 043 B1**
(45) Date of publication and mention of the grant of the patent: **01.07.2009**
(21) Application number: 05761381.2
(22) Date of filing: 21.07.2005
(51) Int. Cl.: F24F 3/14, B01D 53/26

(54) **AIR DEHUMIDIFIER**
LUFTENTFEUCHTER
DÉSHUMIDIFICATEUR D'AIR

(30) Priority: 24.07.2004 EP 04017581
(43) Date of publication of application: 02.05.2007
(73) Proprietor: Henkel AG & Co. KGaA, 40589 Düsseldorf (DE)
(72) Inventor: DE MAN, Eelco, H., Nl-5707 VP Helmond (NL)
(86) International application number: PCT/EP2005/007932
(87) International publication number: WO 2006/010554

(56) References cited:
- EP-A- 0 793 060
- WO-A-99/10082
- WO-A-03/064011
- DE-U- 8 816 583
- US-A- 4 319 679
- US-A- 5 215 561

## Description

The invention concerns a device for absorbing air humidity with a collecting cup for collecting the recovered liquid and with a cup top with a holding device for accommodation of a hygroscopic substance.

Devices of this kind are known in which a simple grid or similar serves as the cup top, is arranged transversally above the opening of the upper side of the cup and onto which is placed the hygroscopic material, the latter usually being packed in an covering or fabric that is permeable to air and water. The hygroscopic material is a material that can absorb air humidity and convert it into a salt solution. This material, a salt refill, usually present in the form of granules, but also in flakes or compact, contains active substances that are irritants, so that they should be prevented from coming into contact with the skin and eyes. Moreover, no dust emanating therefrom should be inhaled.

To this end, certain devices permit a lid provided with air circulation holes to be fitted over the grid carrying the hygroscopic material. This arrangement prevents any involuntary contact with the hygroscopic material in its condition of use. This does not, however, ensure complete safety since, on the one hand, any manipulation, either to empty the cup or to replace a spent filling by refilling hygroscopic granules, constitutes an opportunity for contact with the hygroscopic material, and on the other hand, any knocking of such a cup harbours a risk of upsetting and therefore of spilling the salt solution that has collected in the cup.

The publication EP-A-793 060 discloses a humidity absorbing device of the stated kind with a cup for recovering liquid and with a filling of a hygroscopic substance contained in a basket having a wall that is permeable to humid air and to water. This device further contains means for holding the basket above the cup, the holding means having a perforated holding element that can be arranged above the cup. The basket had dimensions allowing it to be inserted into the perforated holding element through the open upper side of the latter. The basket hangs from an upper wall element which can be arranged transversally in relation to the opening of the upper side of the perforated holding element. As soon as the basket has been brought into position in the perforated holding element, the device forms a compact unit. The filling of hygroscopic material is simultaneously protected by the perforated holding element itself and by the basket in which it is contained. This device simplifies the positioning or replacement of the filling of hygroscopic material and avoids any contact with this material during these manipulations and on emptying of the cup. However, since the collecting cup has no cover, the salt solution is not prevented from spilling out if the cup should tip over.

The object of the present invention is to create a device for absorption of humidity with a cup for recovery of liquid, which overcomes the above-mentioned drawbacks and in which the salt solution present in the cup is retained if the device should be knocked or tipped over.

This object is achieved by a device with the features of patent claim 1.

According to the invention, the device for absorption of humidity comprises a collecting cup with one or more side walls, a base, and an open upper side for collecting the recovered liquid, and a top that can be fitted onto the cup with a holding device inside the top to accommodate a hygroscopic substance. The top has perforated side walls and an open underside which is intended to lie facing the upper side of the collecting cup when the top is fitted in place. Between the collecting cup and the top is arranged a cup cover having a spillage barrier. This cover serves on the one hand as a drip tray for the salt solution dripping from the hygroscopic substance and, on the other hand, as a lid for the collecting cup. The dripping salt solution passes through a spillage barrier into the collecting cup situated below. A preferred form of a spillage barrier is described in more detail with reference to the following drawings. The cover that closes and seals off the collecting cup and the spillage barrier prevent the liquid collected in the collecting cup from spilling out of the cup when the air dehumidifier is tipped over.

Further exemplary embodiments and advantages of the invention can be gathered from the dependant patent claims and from the following description, in which the invention is explained in more detail with reference to a further exemplary embodiment illustrated in the figures, in which:

- Fig. 1: shows a partial view of a schematic sectional representation of the device for absorbing air humidity;
- Fig. 2: shows the cover of the collecting cup with the spillage barrier and the drainage spouts;
- Fig. 3: shows a partial view of the upright air dehumidifier in a sectional representation;
- Fig. 4: shows a partial view of an air dehumidifier tipped over to the left hand side in a sectional representation;
- Fig. 5: shows a partial view of an air dehumidifier tipped over to the right hand side in a sectional representation.

In the figures, the same reference numbers have been used in each case for identical elements, and first explanations refer to all figures unless explicitly stated otherwise.

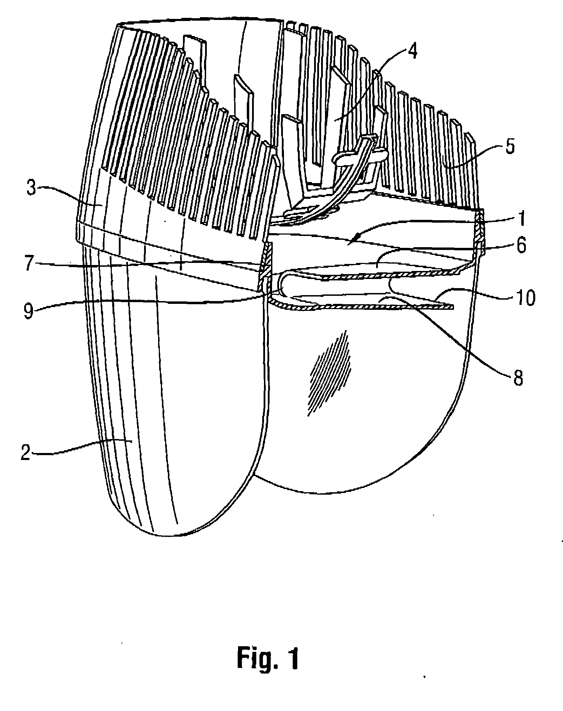

Figure 1 shows a partial view of a schematic sectional representation of the device for absorbing air humidity. In the lower part one can see the cut-away side wall of the collecting cup 2. The cup 2 is closed by the cover 1. The cover 1 has, along its circumference a profile 7 making it possible on the one hand to fit the cover 1 tightly onto the collecting cup 2 and, on the other hand, to clamp the cup top 3 in place on the cup cover 1. The cup top 3 has perforated side walls 5. Inside the cup top is a holding device 4 for the granules or, respectively, for a pack of the hygroscopic substance. The granule pack inserted into this holder 4 is shielded on all sides in the condition of use of the air dehumidifier, so that one cannot come into contact with the granules. The perforated side walls 5 of the cover 3 allow air to circulate through the interior of the device and around the hygroscopic material, which withdraws the humidity from the air and converts it into a salt solution. The salt solution drips onto the cover 1 and passes through channel 8 forming the spillage barrier 6 into the collecting cup 2 below. The spillage barrier is intended to prevent the salt solution from spilling out of the collecting cup 2 in the event that the air dehumidifier tips over. Two requirements have to be fulfilled for the spillage barrier 6 to function. Firstly, the horizontal cross-sectional area of the collecting cup 2 must have sides of different lengths, i.e. a longish rectangular or, even better, an oval shape. The unequal ratio of the sides or the oval shape of the cup 2 determines the direction in which the cup 2 can tip and will ultimately come to rest lying down. In the preferred exemplary embodiment, the collecting cup 2 and the cup cover 1 have an oval shape. Such cups 2 tip in the direction of the shorter axis of the oval and come to rest lying on the side wall with the greater curvature radius, since this is the stable balanced position for the cup 2. Secondly, the barrier 6 is formed by a channel 8 running along the smaller axis of the oval cover 1 in the plane of the cover 1 and is arranged approximately centrally relative to the longer axis of the cover 1, but it can be arranged approximately centrally relative to everywhere on the longer axis of the cover 1. One opening 9 of the channel 8 debouches on the upper side of the cup cover 1 and the second opening 10 of the channel 8 debouches on the underside of the cup cover 1. Preferably, the channel 8 has a slight downward gradient running from the mouth 9 on the cover outer side towards the mouth 10 on the cover underside. This makes it easier for the collected salt solution to drain into the collecting cup 2. In the same way, the cup cover 1 can have a slight downward gradient running from the cover's edge towards the mouth 9, to allow the liquid to drain unrestricted into the cup 2. If the air dehumidifier is now accidentally knocked and tipped over, it will come to rest on its longer transversal side. The liquid collected in the cup 2 cannot spill out since the cup is closed and sealed by the cover 1. In this position, the channel 8 of the spillage barrier 6 runs vertically and in common use, that means the collecting cup 2 is not overfilled, one of the mouths 9,10, depending on the orientation of the cup 2, is above the level of liquid in the cup 2. Even if liquid from the cup enters the channel 8 of the spillage barrier 6 through one of the mouths, it cannot spill out of the cup, since this would cause a negative pressure to develop in the cup interior relative to the outer atmospheric pressure. The situation of the tipped-over cup is explained further with reference to the following drawings.

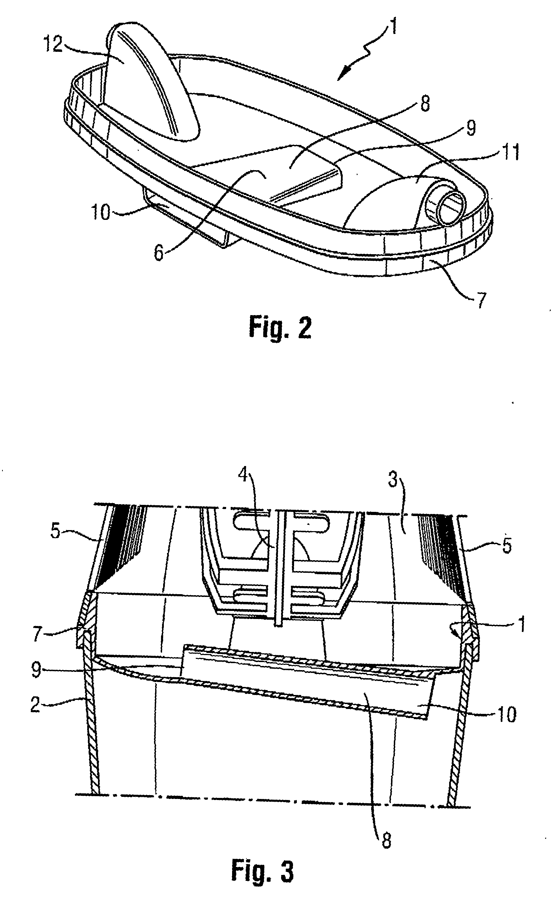

Figure 2 shows a cover 1 of an exemplary embodiment of the air dehumidifier according to the invention. The edge of the cover 1 is formed along the circumference by the profile 7. The spillage barrier 6 with the two mouths 9, 10 of the channel 8 can be seen at the centre of the oval cup cover 1. The cover 1 shown has at its two ends drainage spouts 11, 12. These spouts 11, 12 are moulded onto the cover and serve to empty the cup. By means of these spouts 11, 12, the cup 2 can be emptied without the top 3 with the granules having to be removed from the cup 2. The spouts 11, 12 can be covered with a closure cap (not shown). This prevents liquid from spilling even when the cup 2 is already filled to over half its capacity when it tips over. Embodiments with only one spout 11 are quite possible. The channel 8 can be arranged on the opposite side. So, when the cup 2 is empted by the spout 11, there is no risk to have the salt water which goes through the channel 8.

Figure 3 shows a partial view of an air dehumidifier cut open vertically in the region of the cover. The cover 1 is fitted onto the cup 2 by means of its edge profile 7, and at the upper side of the cover, the top 3 is also fitted onto the profile 7 of the cover's edge. Inside the top 3, the holder for the hygroscopic substance can be seen. The channel 8 of the spillage barrier 6 has a slight downward gradient running from its outer opening 9 to the opening 10 on the underside of the cover. In the form shown, the underside of the cover constitutes a kind of tray which collects the salt solution dripping down and conducts it via the channel 8 into the collecting cup 2. If the air dehumidifier is tipped over, it can only tip in the direction of the shorter axis of the oval.

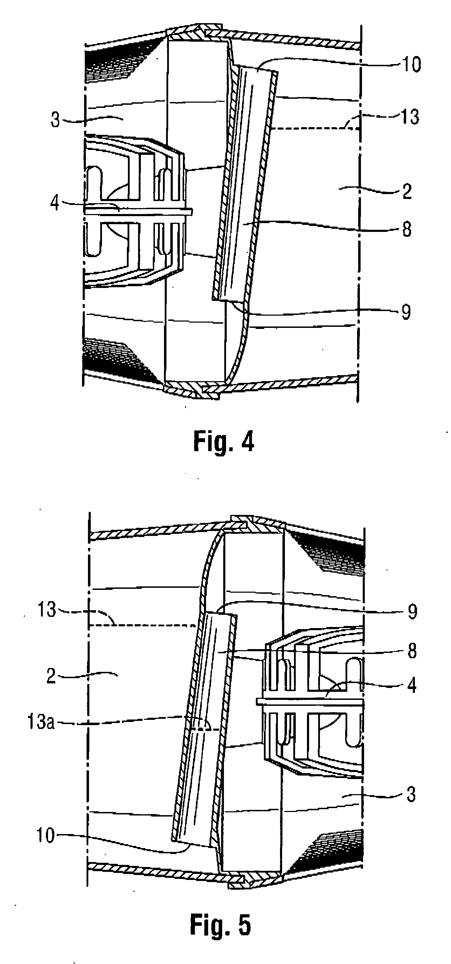

Figure 4 shows the cutaway section of figure 3 after tipping over to the left. The liquid contained in the cup 2 cannot spill out since the cup 2 is covered by the cover 1 and the opening 10 of the channel 8 on the inside of the cover 1 lies above the level 13 of the liquid.

Figure 5 shows the same situation as figure 4, only that the cup 2 is shown as having tipped over to the right. The level 13 of the liquid now lies far above the opening 10 of the channel 8 on the cover underside, but, since the opening 9 on the outer side of the cup cover 1 lies above the level 13 of the salt solution, the liquid cannot spill out through the channel 8. Even if the liquid level 13 rises above the level of the opening 9, the salt solution will not spill out through the channel 8. Since the cup 2 is tightly closed and any emptying through the channel 8 would create a negative pressure inside the cup 2 relative to the outside pressure, the liquid is retained inside the cup by the outside pressure. The liquid level 13a in channel 8 therefore lies below the liquid level 13 in the cup 2 and also below the opening 9 of the spillage barrier. The spillage barrier 6 therefore prevents a spillage of a cup filled nearly to the brim.

The air dehumidifier according to the invention therefore assures safe and risk-free handling of an air dehumidifier of the stated kind. On the one hand, the hygroscopic granules are covered in such a way that no contact with the substance is possible from the outside and, on the other hand, the shape of the cup 2 together with the spillage barrier 6 in the cup cover prevents a spillage of the collected salt solution when the air dehumidifier is tipped over.

### List of reference numbers

- 1: Cup cover
- 2: Collecting cup
- 3: Top with holder
- 4: Holding device for granules
- 5: Perforated side walls
- 6: Spillage barrier in cover
- 7: Edge profile of cover
- 8: Channel
- 9: Outer opening
- 10: Inner opening
- 11: Emptying spout
- 12: Emptying spout
- 13: Level of salt solution
- 13a: Level of salt solution in channel 8 (tipped-over cup)

## Claims

1. Device for absorption of humidity with a collecting cup (2) for collection of the recovered liquid, having a side wall, a base wall and an upper side, and a top (3) that can be fitted onto the cup, said top (3) having a holding device (4) arranged in its interior for the purpose of accommodating a hygroscopic substance and holding the hygroscopic substance above the collecting cup (2), the top having perforated side walls (5) and an open underside which is intended to lie facing the upper side of the collecting cup (2) when the top (3) is fitted in place, ***characterized by** the fact that* a cup cover (1) is arranged between the collecting cup (2) and the top (3) and can be fitted in a sealing manner to the cup rim, and that the top (3) can be clamped onto the cup rim or the profile edge (7) of the cover (1), further that the cover (1) has a spillage barrier (6) which allows salt solution collected by the cover (1) to drain into the collecting cup (2) and which prevents the spillage of the collected salt solution out of a device that has tipped over.

2. Device according to claim 1, **characterized by** the fact that the horizontal cross-sectional area of the collecting cup (2) has sides of differing lengths or axes of differing lengths.

3. Device according to claim 2, **characterized by** the fact that the horizontal cross-sectional area is oval.

4. Device according to claim 2, **characterized by** the fact that the horizontal cross-sectional area is rectangular.

5. Device according to any of the preceding claims, **characterized by** the fact that the spillage barrier (6) is formed by a channel (8) running in the plane of the cover parallel to the shorter axis of the cover (1) and arranged approximately centrally relative to everywhere on the longer axis of the cover (1) and that an opening (9) of the channel (8) debouches on the upper side of the cup cover (1) and the second opening (10) of the channel (8) debouches on the underside of the cup cover (1).

6. Device according to any of the preceding claims, **characterized by** the fact that the channel (8) has a slight downward gradient running from the mouth (9) at the cover outer side to the mouth (10) on the cover underside.

## Patentansprüche

1. Vorrichtung zur Feuchtigkeitsaufnahme mit einer Sammelschale (2) zum Sammeln der aufgefangenen Flüssigkeit mit einer Seitenwand, einer Grundwand und einer Oberseite und mit einem Oberteil (3), das auf die Schale aufgesetzt werden kann, wobei das Oberteil (3) eine Haltevorrichtung (4) aufweist, die in seinem Inneren zum Zwecke der Unterbringung einer wasseranziehenden Substanz und des Haltens der wasseranziehenden Substanz oberhalb der Sammelschale (2) angeordnet ist, wobei das Oberteil perforierte Seitenwände (5) und eine offene Unterseite aufweist, die dazu gedacht ist, zur Oberseite der Sammelschale (2) weisend zu liegen, wenn das Oberteil (3) an seinem Platz angebracht ist, **gekennzeichnet durch** die Tatsache, dass eine Schalenabdeckung (1) zwischen der Sammelschale (2) und dem Oberteil (3) angeordnet ist und dichtend an dem Schalenrand angebracht werden kann, und dass das Oberteil (3) auf den Schalenrand oder die Profilkante (7) der Abdeckung (1) geklemmt werden kann, ferner dass die Abdeckung (1) eine Auslaufsperre (6) aufweist, die es ermöglicht, dass eine Salzlösung, die von der Abdeckung (1) gesammelt wurde, in die Sammelschale (2) ablaufen kann, und die das Auslaufen der gesammelten Salzlösung aus einer umgekippten Vorrichtung verhindert.

2. Vorrichtung nach Anspruch 1, **gekennzeichnet durch** die Tatsache, dass die horizontale Querschnittfläche der Sammelschale (2) Seiten mit unterschiedlichen Längen oder Achsen mit unterschiedlichen Längen aufweist.

3. Vorrichtung nach Anspruch 2, **gekennzeichnet durch** die Tatsache, dass die horizontale Querschnittfläche oval ist.

4. Vorrichtung nach Anspruch 2, **gekennzeichnet durch** die Tatsache, dass die horizontale Querschnittfläche rechteckig ist.

5. Vorrichtung nach einem der vorstehenden Ansprüche, **gekennzeichnet durch** die Tatsache, dass die Auslaufsperre (6) **durch** einen Kanal (8) gebildet ist, der sich in der Ebene der Abdeckung parallel zu der kürzeren Achse der Abdeckung (1) erstreckt und in etwa mittig relativ zu jedem Punkt auf der längeren Achse der Abdeckung (1) angeordnet ist; und dass eine Öffnung (9) des Kanals (8) auf der Oberseite der Schalenabdeckung (1) mündet und die zweite Öffnung (10) des Kanals (8) auf der Unterseite der Schalenabdeckung (1) mündet.

6. Vorrichtung nach einem der vorstehenden Ansprüche, **gekennzeichnet durch** die Tatsache, dass der Kanal (8) einen leichten Abwärtsgradienten aufweist, der sich von der Mündung (9) an der Außenseite der Abdeckung zu der Mündung (10) auf der Unterseite der Abdeckung erstreckt.

## Revendications

1. Dispositif pour l'absorption d'humidité avec un bac de collecte (2) pour la collecte du liquide récupéré, ayant une paroi latérale, une paroi de base et un côté supérieur, et un haut (3) qui peut être disposé sur le bac, ledit haut (3) ayant un dispositif de maintien (4) agencé dans son intérieur afin de recevoir une substance hygroscopique et maintenir la substance hygroscopique au-dessus du bac de collecte (2), le haut ayant des parois latérales (5) perforées et un côté inférieur ouvert qui est destiné à reposer face au côté supérieur du bac de collecte (2) lorsque le haut (3) est mis en place, ***caractérisé par** le fait qu*'un couvercle de bac (1) est agencé entre le bac de collecte (2) et le haut (3) et peut être disposé d'une manière étanche sur le rebord du bac, et que le haut (3) peut être fixé sur le rebord du bac ou le bord profilé (7) du couvercle (1), en outre que le couvercle (1) a une barrière anti-débordement (6) qui permet qu'une solution de sel collectée par le couvercle (1) soit évacuée dans le bac de collecte (2) et qui empêche le débordement, de la solution de sel collectée, à l'extérieur d'un dispositif qui a été renversé.

2. Dispositif selon la revendication 1, **caractérisé par le fait que** la surface de coupe transversale horizontale du bac de collecte (2) a des côtés de longueurs différentes ou des axes de longueurs différentes.

3. Dispositif selon la revendication 2, **caractérisé par le fait que** la surface de coupe transversale horizontale est ovale.

4. Dispositif selon la revendication 2, **caractérisé par le fait que** la surface de coupe transversale horizontale est rectangulaire.

5. Dispositif selon l'une quelconque des revendications précédentes, **caractérisé par le fait que** la barrière anti-débordement (6) est formée par un canal (8) disposé dans le plan du couvercle parallèle à l'axe le plus court du couvercle (1) et agencé de manière approximativement centrale par rapport à un point quelconque sur l'axe le plus long du couvercle (1) et qu'une ouverture (9) du canal (8) débouche sur le côté supérieur du couvercle (1) de bac et la deuxième ouverture (10) du canal (8) débouche sur le côté inférieur du couvercle (1) de bac.

6. Dispositif selon l'une quelconque des revendications précédentes, **caractérisé par le fait que** le canal (8) a une pente légèrement vers le bas allant de l'embouchure (9) au niveau du côté extérieur du couvercle jusqu'à l'embouchure (10) sur le côté inférieur du couvercle.
